# EUROPEAN PATENT SPECIFICATION

(11) **EP 2 107 835 B1**
(45) Date of publication and mention of the grant of the patent: **28.12.2011**
(21) Application number: 08380108.4
(22) Date of filing: 04.04.2008
(51) Int. Cl.: H04W 12/02, H04W 48/12

(54) **System and method for network-side control of system information parameters**
System und Verfahren zur netzwerkseitigen Steuerung von Systeminformationsparametern
Système et procédé pour le contrôle côté réseau de paramètres d'information du système

(43) Date of publication of application: 07.10.2009
(73) Proprietor: Vodafone Group PLC, Newbury Berkshire RG14 2FN (GB); Vodafone España, S.A., 28108 Alcobendas (Madrid) (ES)
(72) Inventor: Dominguez Romero, Francisco Javier c/o Vodafone Espana S.A.U.C., 28050 Madrid (ES); Almodovar Herraiz, Daniel c/o Vodafone Espana S.A.U.C., 28050 Madrid (ES); Alcazar Viguera, Esperanza c/o Vodafone Espana S.A.U.C., 28050 Madrid (ES); Tenorio Sanz, Santiago c/o Vodafone Espana S.A.U.C., 28050 Madrid (ES)
(74) Representative: Keston, David Arthur

(56) References cited:
- WO-A-2008/026180
- LING LIU, BHUVAN BAMBA: "PRIVACYGRID: Supporting Anonymous Location Queries in Mobile Environments"[Online] 2007, XP002494562 Georgia Institute of Technology Retrieved from the Internet: URL:http://smartech.gatech.edu/handle/1853 /20111> [retrieved on 2008-09-03]
- LING LIU: "From Data Privacy to Location Privacy: Models & Algorithms"[Online] 2007, XP002494563 Retrieved from the Internet: URL:http://www.vldb2007.org/program/slides /s1429-liu.pdf> [retrieved on 2008-09-03]
- BARBEAU M ET AL: "Perfect identity concealment in UMTS over radio access links" WIRELESS AND MOBILE COMPUTING, NETWORKING AND COMMUNICATIONS, 2005. (W IMOB'2005), IEEE INTERNATIONAL CONFERENCE ON MONTREAL, CANADA AUG. 22-24, 2005, PISCATAWAY, NJ, USA,IEEE, vol. 2, 22 August 2005 (2005-08-22), pages 72-77, XP010838822 ISBN: 978-0-7803-9181-9

## Description

### BACKGROUND OF THE INVENTION

### Technical field

The present invention relates to a system and a method for control at a network side of at least a System Information parameter to be received by and/or transmitted from terminals of a cellular network.

### Description of related art

In mobile telephony systems, such as GSM or UMTS, the elements that make the system work, i.e. its functions and protocols, are distributed between the network and the mobile terminal.

The elements at the network side are under the protection of the mobile operator. Network equipment is generally present in base stations, to which the general public does not have access, or in secured buildings. Besides, the mobile operators must fulfil all terms of the licence received from the government and must fulfil as well all laws related to privacy of communications, privacy of user's data and legal interception.

The elements at the terminal side have also been, until very recently, protected and not accessible, because of the closed operation systems used by the terminal manufacturers. However, new open operation systems, such as Symbian and Windows Mobile, although bringing a whole new breed of applications valuable for the end-users, also bring the risk of exposing to malicious parties the elements we are considering, i.e. the functions and protocols that represent the basic functioning of the system. In other words, this unprotected environment could enable third parties to bypass at the terminal side the licence terms and laws that are enforced at the network side. For instance, although the location of customers may only be done with their consent, in the current situation there is a high risk of not fulfilling this consent pre-requirement as non-controlled applications at the terminal could obtain or derive that location from accessible low-level System Information.

On one hand, possible solutions to this problem could be non-technical, i.e. based on agreements, contracts and law enforcements on the third parties developing applications for the terminals. However, this will not prevent malicious software developed by hackers and distributed over the Internet from getting access to the low-level System Information.

On the other hand, possible solutions to this problem could be technical, i.e. based on mechanisms in the terminal or in the network. Only the former have been developed so far, by means of controlled Application Programming Interfaces (APIs) or interfaces in the operation systems of the terminals. However, the trend is to open the operation systems more and more, and, indeed, existing APIs or interfaces already provide tools that could enable the malicious use of System Information.

On such approach is reviewed in "PRIVACYGRID: Supporting Anonymous Location Queries in Mobile Environments" by Bhuvan Bamba et al. of the Georgia Institute of Technology. PRIVACYGRID allows users to provide their personal location privacy requirements to a location anonymization server and for the server to provide the requested degree of location anonymity in any request from that user for location services.

It is an object of the invention to provide a new set of technical solutions based on functionality in the network, overcoming the limitations related to the lack of control in the existing non-technical solutions and the limitations of existing technical solutions based on the functionality of the terminal.

### SUMMARY OF THE INVENTION

Thereto, according to an aspect of the invention a system according to independent claim 1 and a method according to independent claim 12 are provided. Favourable embodiments are defined in dependent claims 2-11 and 13-15.

According to an aspect of the invention a system is provided for control at a network side of at least a System Information Parameter to be received by and/or transmitted from terminals of a cellular network, the System Information Parameter being broadcast by base stations of the cellular network. The system comprises storage means for storing a first set of values and a second set of values for the System Information Parameter, wherein there is a match between the values of the first and the second set being a value in one of the sets associated with only one value of the other set. The first set of values is used for communication over the radio interface and the second set of values is used in the rest of the network other than the radio interface. The system comprises furthermore varying means for varying periodically the first set of values without altering the second set of values and translating means for translating values from the first set of variable values of the parameter into values from the second set of values of the parameter for messages sent in the uplink direction and viceversa for messages sent in the downlink direction.

So, according to the present invention the mobile operator is enabled to act from the network side over the basic System Information available at the terminal side. Due to the fact that the terminals use a variable value of the System Information parameter that is not the same as the fixed value of the System Information parameter used in the rest of the cellular network, malicious use of the System Information parameter by means of the terminals is prevented. At the same time, the normal behaviour of the terminals in the cellular network is not affected. In particular, the invention focuses on a special management at the network side of the System Information parameters broadcast by the base stations via the radio interface, i.e. the downlink direction as well as a special management of those parameters when they are returned back from the mobile terminals to the network, i.e. the uplink direction. This special management could be applied by decision of the operator alone or enforced by the authorities.

The preferred implementation of the invention is related to the Cell Global Identity parameter (CGI). The malicious use thereof could lead to break the laws related to privacy of a user's location. However, also other parameters broadcast in the System Information messages could be treated in a similar way, in particular parameters enabling determining the location of a terminal. For instance, the couple of parameters Absolute Radio Frequency Channel Number (ARFCN) and Base Station Identity Code (BSIC) together in the GSM system, and the parameter Scrambling Code in the UMTS system represent also a type of limited cell "identity" in the area corresponding to a Base Station Controller (BSC) or Radio Network Controller (RNC). Other parameters that could be modified according to the present invention are the C1 and C2 parameters for cell selection and reselection in idle mode.

According to an embodiment of the invention, both the storage means and the varying means are incorporated in a radio subsystem of the network. The second set of fixed values of the System Information parameter, stored in the storage means and to be used in the parts of the network other than the radio interface, is provided and chosen by the mobile operator. The first, matched set of variable values of the System Information parameter to be used at the radio interface is generated by the radio subsystem itself, e.g. by using random values.

According to an alternative embodiment the varying means are located outside the radio subsystem and the system comprises feeding means for feeding the variations in the first set of values to the storage means incorporated in the radio subsystem. In this case, the first set of variable values of the System Information parameter may be provided by the mobile operator and fed into the radio subsystem through the regular Operation and Maintenance (O&M) interfaces.

The varying means may be adapted for varying the first set of values only for a regional area of the cellular network, such as a city or for varying the first set of values for the whole cellular network. In the former case, the variation of the first values of the System Information parameter, for example the frequency thereof or the used algorithm may differ between different regional areas in case this is needed. For example, in case that some regions are more important than others the variation in these important regions may be more frequent. However, in case of varying the first set of values only for a regional area, if the System Information parameter represents a cell identity, it is necessary to synchronously vary the first set of values of both the cells and the neighbour cells of a control node, such as a Base Station Controller or a Radio Network Controller, because the list of neighbour cells is required for a correct functioning of the cellular network.

The varying means are adapted for varying the first set of values, periodically, for example every day or every week. In case that the System Information parameter represents a cell identity, a short variation interval of the first set of values will keep the chances sufficiently small, that malicious parties discover the relationship between the first set of values and the cells of the network, enabling the determination of the location of a user without his consent. Advantageously, the time period between two variations of the first set of values is programmable.

Alternatively or additionally, the varying means are adapted for varying the first set of values on demand of the mobile operator at specific occasions, for example in case that it is known that a third party has discovered the relation between the first set of values of the cell identity parameter and the cells of the network.

The storage means may be centralised, thereby enabling efficient administration of the first and second set of values of the System Information parameter. However, in this case, there exists a need of communication between the storage means and remotely arranged translating means, which may be slow.

Therefore, according to a preferred embodiment, the storage means are distributed among the nodes of the radio subsystem of the network, and preferably co-located with the translating means, such that the communication between the storage means and translating means may be fast.

The translating means may be incorporated, at least partially in the control plane, preferably in a control node such as a Base Station Controller and/or Radio Network Controller, wherein at least one of the signalling messages over the lub and/or Abis interface comprise a parameter from the first set of values and wherein at least one of the signalling messages over the lu and/or A/Gb interface comprise a parameter from the second set of values. The presence of the translating means in the Base Station Controller or Radio Network Controller is favourable, because it enables the implementation of the invention by only adapting the functionality of these nodes. There is no need to adapt the functionality of any other nodes in the cellular network, such as the nodes in the Core Network.

The translating means may additionally be incorporated, at least partially in the user plane, either in a server or in a gateway performing the translation for a plurality of servers. Both options enable an efficient handling of the translation.

According to a further embodiment of the invention, means are provided in the user-plane (e.g. by SMS or IP) to send an encrypted version of the first and second set of values to the terminals or SIM-card thereof. This allows terminal or SIM applications authorised by the mobile operator to know and manage the fixed set of values.

According to a further aspect of the invention a method is provided for control at a network side of at least a System Information Parameter to be received by and transmitted from terminals of a cellular network the System Information Parameter being broadcast by the base stations of the cellular network, comprising the steps of storing a first set and a second set of values for the System Information Parameter, wherein there is a match between the values of the first and the second set being a value in one of the sets associated with only one value of the other set,, the first set of values to be used for communication over the radio interface and the second set of values to be used in the rest of the network other that the radio interface, varying the first set of values periodically without altering the second set of values and translating values from a first set of variable values of the parameter into values from a second set of values of the parameter for messages sent in the uplink direction and vice versa for messages sent in the downlink direction.

Preferably, the method according to the invention is implemented by means of a computer program.

These and other aspects of the invention will be apparent from and elucidated with reference to the embodiments described hereinafter.

### BRIEF DESCRIPTION OF THE DRAWINGS

The invention will be better understood and its numerous objects and advantages will become more apparent to those skilled in the art by reference to the following drawings, in conjunction with the accompanying specification, in which:

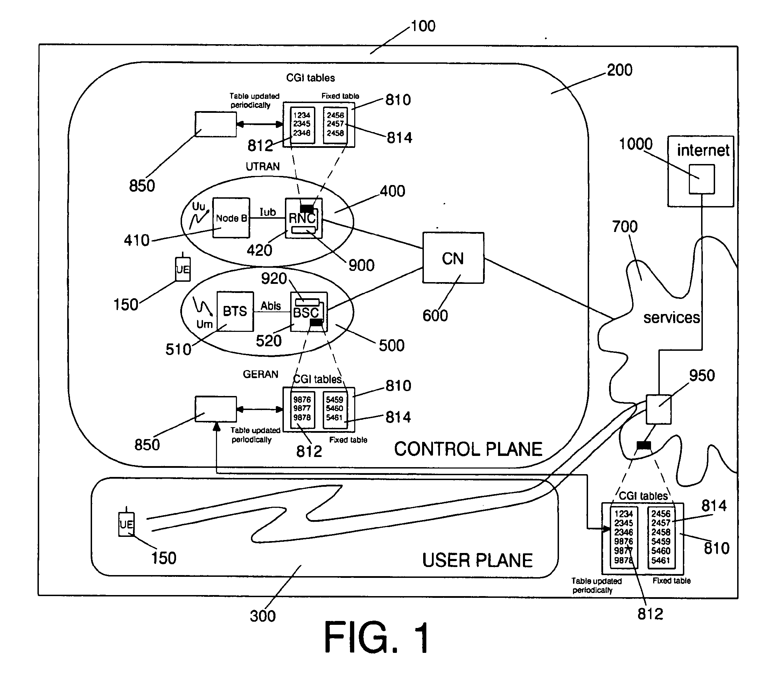

Figure 1 shows a cellular network comprising the network-side control of System Information parameters according to an embodiment of the present invention.

Throughout the figures like reference numerals refer to like elements.

### DETAILED DESCRIPTION OF THE PRESENT INVENTION

Referring now to figure 1, an exemplary embodiment of the system according to the invention will be described. Figure 1 shows a cellular network 100 and several User Equipments (UE) or terminals 150 which can communicate with the cellular network 100. The cellular network comprises a control plane 200 and a user plane 300. The control plane 200 comprises a first radio subsystem 400 working according to the UMTS-standard. The first radio subsystem 400 comprises a plurality of nodes B 410 (only a single one shown) and at least a Radio Network Controller (RNC) 420. The terminals 150 and the nodes B 410 communicate over a radio interface Uu. The nodes B 410 and RNCs 420 communicate over the lub interface. The control plane 200 furthermore comprises a second radio subsystem 500 working according to the GSM-standard. The second radio subsystem 500 comprises a plurality of Base Transceiver Stations (BTS) 510 (only a single one shown) and at least a Base Station Controller (BSC) 520. The terminals 150 and BTSs 510 communicate over a radio interface Um. The BTSs 510 and BSCs 520 communicate over the Abis interface. The cellular network 100 further comprises a Core Network that communicates with the RNCs 420 over the lu interface and with the BSCs 520 over the A/Gb interface. Furthermore, the cellular network comprises a services platform 700 of the mobile operator.

According to an embodiment of the invention, the cellular network comprises a system for control at the network side of Cell Global Identity (CGI) parameters. The system comprises double CGI lists 810 stored in suitable storage means, such as mass memories. The double CGI lists can be seen as tables with 2 columns: a first column 812 contains a first set of values of CGIs to be used at the radio interface, i.e. the values of the CGIs used in messages broadcast by the base stations, read by the terminals, and reported from the terminals to network. A second column 814 contains a second set of values of CGIs to be used in other parts of the network, i.e. in procedures different from the ones at the radio interface. One feature of these double lists 810 is that there is a bi-univocal match between the values of both columns, i.e. a CGI value in one of the columns is associated with one and only one value of the other column. The double CGI lists 810 are introduced in the normal operation of the cellular network, i.e. these double CGI lists are taken into account in those procedures than make use of the CGI parameter. According to the embodiment shown in figure 1, the double CGI lists 810 are distributed over the RNC(s) 420, the BSC(s) 520 and the service platform 700.

The CGI values of cells of the 3G radio subsystem 400 and the 2G radio subsystem 500 are mutually different. In the embodiment shown in figure 1, the double lists 810 in the RNC 420 and the BSC 520 are partial lists comprising only CGI values of their own radio subsystem 400,500. However, the double list 810 in the services platform 700 is a complete list comprising all CGI values of the whole cellular network 100.

The system includes varying means 850 to vary or change the column 812 with the first set of CGI values corresponding to the radio interface while at the same time leaving the second set of values in column 814 unchanged. In this way the CGI values used in messages broadcast by the base stations, read by terminals and reported from terminals to network vary in time, whereas the CGI values handled in any other part of the network, including the Core Network and service platforms remain unchanged, not requiring any modification in such parts or systems. The varying means 850 can be arranged de-centrally, co-located with the double CGI-lists 810, or centrally at a place inside or even outside the cellular network 100. The varying means 850 can be implemented by means of a processor loaded with a suitable computer program.

The second set of (fixed) values of the CGI to be used in the rest of the network is provided and chosen by the mobile operator. The first set of (matched) values of the CGI to be used in the radio interface can be generated by the radio sub-system itself (e.g. random values) or can be provided also by the mobile operator and fed into the radio system through the regular O&M interfaces.

In the space dimension, the modification of the first set of variable CGI values for the radio interface could be done for the whole radio subsystem 400,500 or only for a regional area, e.g. a city.

In the time dimension, the modification of the first set of variable CGI values for the radio interface by the varying means 850 can be programmed to be periodical, e.g. every day or every week or be requested on demand by the mobile operator for specific occasions.

The cellular network furthermore is adapted for translating at a network side between variable and fixed Cell Global Identity (CGI) parameters and vice versa. Preferably, the network comprises first translating means 900 and second translating means 920 in the control plane 200 and third translating means 950 in the user plane 300. The first, second and third translating means 900, 920, 950 can all be implemented by means of a processor loaded with a suitable computer program.

In the control plane 200, the cellular network includes first translating means 900 being part of the RNC(s) 420 and second translating means 920 being part of the BSC(s). The first and second translating means 900, 920 are adapted for translating of the CGI values in signalling messages sent in both directions (downlink and uplink) according to the double CGI list 810 available at the time of the translation. Thereto, the signalling messages comprising CGIs should be detected in the RNC/BSC and selected for translation. In case of the UMTS radio subsystem 400, some examples of signalling messages containing CGI, which should be translated are, in the downlink direction, BCCH System Information, Cell Update Confirm, Handover to UTRAN command, Physical Channel Reconfiguration, RB reconfiguration, RB release, RRC Connection setup or Tra CH Reconfiguration and, in the uplink direction, Cell measured Results. Also in case of the GSM radio subsystem 500, all signalling messages containing CGI should be translated as for example the system information messages (system information type 3, system information type6, SI 4 Rest Octets) , DTM (dual transfer mode) details and VGCS ciphering parameters information. In both cases, this translation is done so that all the messages comprising CGIs between RNC/BSC 420,520 and UE 150 use a CGI value from the first set of variable values, whereas all messages of the control plane over the lu and A/Gb interfaces from or towards the Core Network use a CGI value from the second set of fixed values. In the downlink messages, the translating means 900,920, which have knowledge of the double CGI list, must insert the variable CGI value that corresponds to the known fixed value of that cell. In the uplink messages, the translating means 900,920, must insert in any signalling message comprising CGIs and sent further to the Core Network the fixed CGI value that corresponds to the received variable CGI value of that cell.

For example, in UMTS, a typical message from the RNC to the UE where the CGI value must be translated from the fixed value to the variable value is the BCCH System Information message, as mentioned before. On the other hand, typical messages where this translation is not needed are those messages from the UE directly sent to the Core Network (Connection Management or Mobility Management protocols like for example a Location Area Update) where the RNC encapsulates the messages over the lu interface in the Direct Transfer messages as defined by 3GPP. Those messages from the UE don't include any CGI value. The RNC retransmits those messages from the UE inserting, among other parameters, the CGI value. In this case, the RNC must insert the fixed value of the CGI.

In the user plane, the invention includes third translating means 950 arranged outside the radio subsystems 400,500, for example in the services platform 700 of the mobile operator. The third translating means 950 translate, at the network's end of the user plane bearer and in both directions, uplink and downlink, all CGI values according to the double CGI list 810 available at the time of translation. An example of this translation is the scenario in which a SIM Toolkit or terminal application periodically sends the CGI value read at the terminal side 150 to a server via SMS or IP. In case that no translation is performed, the received CGI would correspond to a variable CGI value, which is unusable at the services platform 700. Therefore, it must be translated into its corresponding fixed CGI value, for instance because the existing operator databases at the services platform 700 such as the ones mapping CGIs to Geographical coordinates (latitude, longitude) make use of the fixed CGI values. Likewise, in the downlink direction, if an operator's location application in the terminal or SIM card requires the provision of certain CGI values, for instance, to trigger a proximity event, these values should correspond to the variable part of the double CGI list. Therefore, in this case a translation of the fixed CGI value into the corresponding variable CGI value should be performed. The translation in the user plane can be easily handled by just enabling the third translating means 950 arranged in a server to access to the double CGI list 810. Alternatively, if there are several servers requiring this functionality, because they need the CGI obtained from terminals or need to send CGI to terminals, a gateway comprising the third translating means 950 could be introduced to make the translation for all of them. It should be noted that an incoming message in the user plane carrying a variable CGI value as content can come not only from a terminal or SIM application but also from another server 1000 or network that has a connection or agreement with the mobile operator. An example of this would be a commercial agreement and service inter-working between the mobile operator and an external application provider, where a server of the application provider collects variable CGI values from the terminals (e.g. sent by terminal applications distributed by the application provider to the mobile users) and then forwards those variable CGI values to the mobile operator for getting back a translation into geographical coordinates.

The existence of these two scenarios, user plane and control plane, means that the double CGI lists 810 must be available both inside and outside the radio subsystems 400,500.

While the invention has been illustrated and described in detail in the drawings and foregoing description, such illustration and description are to be considered illustrative or exemplary and not restrictive; the invention is not limited to the disclosed embodiments.

First of all, the invention is not limited to CGI parameters but also other parameters broadcast in the System Information messages could be treated in a similar way as described herein above, in particular parameters enabling determining the location of a terminal. For instance, the couple of parameters Absolute Radio Frequency Channel Number (ARFCN) and Base Station Identity Code (BSIC) together in the GSM system, and the parameter Scrambling Code in the UMTS system represent also a type of limited cell "identity" in the area corresponding to a Base Station Controller (BSC) or Radio Network Controller (RNC). Other parameters that could be modified according to the present invention are the C1 and C2 parameters for cell selection and reselection in idle mode.

Furthermore, the invention may be applied to cellular networks working according to other standards than UMTS and GSM, such as networks according to the CDMA2000 standard or networks according to future fourth generation standards.

Furthermore, it is possible to operate the invention in an embodiment wherein the double CGI list could be centralised. In this case it should comprise all CGI values of the whole cellular network. Alternatively, in case that it is distributed over the BSC/RNCs, it may only comprise the CGI values that are needed by the relevant BSC/RNC as is shown in figure 1.

Regarding the CGI values needed in the double CGI lists in this latter embodiment, in cellular networks such as GSM or UMTS the CGI value is employed in the list of neighbour cells, which are required for the normal functioning of the networks. This means that in this embodiment a synchronisation mechanism is needed for varying the cells belonging to a certain BSC/RNCs and its neighbour cells. In the case that the double CGI list is distributed to a BSC/RNC, apart from the list of CGIs of the cells under the BSC/RNC, also the list of the neighbour cells is provided having the fixed and variable value for every neighbour cell. An example of situation where neighbour cell information is required is in the case of Soft Handover between two RNCs: the downlink signalling messages carry the cell identification of the cell under the current RNC and neighbour cells of the neighbour RNC.

In addition, according to an embodiment of the invention a mechanism is provided in the user-plane (e.g. by SMS or IP) to send an encrypted version of the double CGI list to the terminal or SIM. This mechanism allows terminal or SIM applications authorised by the mobile operator to know and manage the fixed CGI values. The encryption of this information is based on strong GSM/UMTS encryption mechanisms and keys so that the double CGI list is not be accessible to hackers or malicious software. In any case, the validity of the double CGI list sent to the terminal or SIM is limited to the time that a new change is performed in the variable set of CGIs, and in this case, it should be distributed again.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. System for control at a network side of at least a System Information Parameter to be received by and/or transmitted from terminals (150) of a cellular network (100), the System Information Parameter being broadcast to the terminals (150) by the base stations (410, 510) of the cellular network , the system comprising:
- storage means (810) for storing a first set of values (812) and a second set of values (814) for the System Information Parameter, wherein there is a match between the values of the first and the second set, being a value in one of the sets associated with only one value of the other set, the first set of values to be used for communication over the radio interface, Uu, Um, and the second set of values to be used in the rest of the network other than the radio interface,
- varying means (850) for periodically varying the first set of values without altering the second set of values and
- translating means (900,920,950) for translating values from the first set of variable values of the parameter into values from the second set of values of the parameter for messages sent in the uplink direction and vice versa for messages sent in the downlink direction.

2. System according to claim 1 wherein the varying means are adapted for varying the first set of values only for a regional area of the cellular network.

3. System according to claim 2 wherein the varying means are adapted for synchronously varying the first set of values of the cells and the neighbour cells of a control node (520; 420).

4. System according to claim 1 wherein the varying means are adapted for varying the first set of values for the whole cellular network.

5. System according to any of the preceding claims wherein the time period between two variations of the first set of values is programmable.

6. System according to any of the preceding claims wherein the varying means are adapted for varying the first set of values on demand.

7. System according to any of the preceding claims wherein the storage means are centralised or wherein the storage means are distributed among the nodes of the radio subsystem of the network.

8. System according to any of the preceding claims wherein the System Information Parameter is a parameter enabling determining the location of a terminal, said parameter being selected from a group of parameters representing a cell identity and the group including: the Cell Global Identity Parameter, the Base Station Identity Code, the Absolute Radio Frequency Channel Number, the Scrambling Code, C1 parameters and C2 parameters.

9. System according to any of the preceding claims wherein the translating means are incorporated, at least partially in the control plane (200), in a control node (520;420), wherein at least one of the signalling messages over the Iub and/or Abis interface comprise a parameter from the first set of values and wherein at least one of the signalling messages over the Iu and/or A/Gb interface comprise a parameter from the second set of values.

10. System according to any of the preceding claims wherein the translating means are incorporated, at least partially in the user plane (300), either in a server or in a gateway performing the translation for a plurality of servers.

11. System according to any of the preceding claims comprising means for sending an encrypted version of the first and optionally the second set of values (812,814) to the terminals (150) or a SIM-card thereof.

12. Method for control at a network side of at least a System Information Parameter to be received by and/or transmitted from terminals (150) of a cellular network (100), the System Information Parameter being broadcast to the terminals (150) by the base stations (410, 510) of the cellular network, the method comprising the steps of:
- storing a first set (812) and a second set (814) of values for the System Information parameter, wherein there is a match between the values of the first and the second set, being a value in one of the sets associated with only one value of the other set, the first set of values to be used for communication over the radio interface and the second set of values to be used in the rest of the network other than the radio interface,
- varying periodically the first set of values without altering the second set of values, and
- translating values from a first set of variable values of the parameter into values from a second set of values of the parameter for messages sent in the uplink direction and vice versa for messages sent in the downlink direction.

13. A computer program comprising computer program code means adapted to perform the steps of claim 12, when said program is run on a computer.

14. A computer program as claimed in claim 13 embodied on a computer readable medium.

15. A carrier medium carrying the computer program of claim 13.

## Patentansprüche

1. System zur netzwerkseitigen Steuerung von wenigstens einem Systeminformationsparameter, der von Endgeräten (150) eines zellulären Netzwerks (100) empfangen und/oder gesendet werden soll, wobei der Systeminformationsparameter von den Basisstationen (410, 510) des zellulären Netzwerks zu den Endgeräten (150) rundgesendet wird, wobei das System Folgendes umfasst:
- Speichermittel (810) zum Speichern eines ersten Satzes von Werten (812) und eines zweiten Satzes von Werten (814) für den Systeminformationsparameter, wobei es eine Übereinstimmung zwischen den Werten des ersten und des zweiten Satzes gibt, die ein Wert in einem der mit nur einem Wert des anderen Satzes assoziierten Sätze ist, wobei der erste Satz von Werten für die Kommunikation über die Funkschnittstelle Uu, Um verwendet werden soll und der zweite Satz von Werten im Rest des Netzwerks ausgenommen in der Funkschnittstelle verwendet werden soll,
- Varüerungsmittel (850) zum periodischen Variieren des ersten Satzes von Werten, ohne den zweiten Satz von Werten zu verändern, und
- Umsetzmittel (900,920,950) zum Umsetzen von Werten aus dem ersten Satz von variablen Werten des Parameters in Werte aus dem zweiten Satz von Werten des Parameters für in Uplink-Richtung gesendete Nachrichten und umgekehrt für in Downlink-Richtung gesendete Nachrichten.

2. System nach Anspruch 1, wobei die Variierungsmittel zum Variieren des ersten Satzes von Werten nur für einen regionalen Bereich des zellulären Netzwerks ausgelegt sind.

3. System nach Anspruch 2, wobei die Variierungsmittel zum synchronen Variieren des ersten Satzes von Werten der Zellen und der Nachbarzellen eines Steuerknotens (520; 420) ausgelegt sind.

4. System nach Anspruch 1, wobei die Variierungsmittel zum Variieren des ersten Satzes von Werten für das gesamte zelluläre Netzwerk ausgelegt sind.

5. System nach einem der vorherigen Ansprüche, wobei die Zeitperiode zwischen zwei Variationen des ersten Satzes von Werten programmierbar ist.

6. System nach einem der vorherigen Ansprüche, wobei die Variierungsmittel zum Variieren des ersten Satzes von Werten bei Bedarf ausgelegt sind.

7. System nach einem der vorherigen Ansprüche, wobei die Speichermittel zentralisiert sind oder wobei die Speichermittel unter den Knoten des Funksubsystems des Netzwerks verteilt sind.

8. System nach einem der vorherigen Ansprüche, wobei der Systeminformationsparameter ein Parameter ist, der das Ermitteln des Ortes eines Endgerätes ermöglicht, wobei der genannte Parameter ausgewählt ist aus einer Gruppe von Parametern, die eine Zellidentität repräsentieren, und die Gruppe Folgendes beinhaltet: den Cell Global Identity Parameter, den Base Station Identity Code, die Absolute Radio Frequency Channel Number, den Scrambling Code, C1-Parameter und C2-Parameter.

9. System nach einem der vorherigen Ansprüche, wobei die Umsetzmittel wenigstens teilweise in der Steuerebene (200) in einem Steuerknoten (520; 420) integriert sind, wobei wenigstens eine der Signalisierungsnachrichten über die lub- und/oder Abis-Schnittstelle einen Parameter aus dem ersten Satz von Werten beinhaltet und wobei wenigstens eine der Signalisierungsnachrichten über die Iu- und/oder A/Gb-Schnittstelle einen Parameter aus dem zweiten Satz von Werten beinhaltet.

10. System nach einem der vorherigen Ansprüche, wobei die Umsetzmittel wenigstens teilweise in der Benutzerebene (300) entweder in einem Server oder in einem Gateway integriert sind, der/das die Umsetzung für mehrere Server durchführt.

11. System nach einem der vorherigen Ansprüche, das Mittel zum Senden einer verschlüsselten Version des ersten und optional des zweiten Satzes von Werten (812, 814) zu den Endgeräten (150) oder zu einer SIM-Karte davon umfasst.

12. Verfahren zum netzwerkseitigen Steuern von wenigstens einem Systeminformationsparameter, der von Endgeräten (150) eines zellulären Netzwerks (100) empfangen und/oder gesendet werden soll, wobei der Systeminformationsparameter von den Basisstationen (410, 510) des zellulären Netzwerks zu den Endgeräten (150) rundgesendet wird, wobei das Verfahren die folgenden Schritte beinhaltet:
- Speichern eines ersten Satzes (812) und eines zweiten Satzes (814) von Werten für den Systeminformationsparameter, wobei es eine Übereinstimmung zwischen den Werten des ersten und des zweiten Satzes gibt, die ein Wert in einem der mit nur einem Wert des anderen Satzes assoziierten Sätze ist, wobei der erste Satz von Werten für die Kommunikation über die Funkschnittstelle und der zweite Satz von Werten im Rest des Netzwerks ausgenommen in der Funkschnittstelle verwendet werden soll,
- periodisches Variieren des ersten Satzes von Werten, ohne den zweiten Satz von Werten zu verändern, und
- Umsetzen von Werten aus einem ersten Satz von variablen Werten des Parameters in Werte aus einem zweiten Satz von Werten des Parameters für in Uplink-Richtung gesendete Nachrichten und umgekehrt für in Downlink-Richtung gesendete Nachrichten.

13. Computerprogramm, das Computerprogrammcode zum Ausführen der Schritte von Anspruch 12 umfasst, wenn das genannte Programm auf einem Computer abgearbeitet wird.

14. Computerprogramm nach Anspruch 13, das auf einem rechnerlesbaren Medium ausgestaltet ist.

15. Trägermedium, das das Computerprogramm von Anspruch 13 trägt.

## Revendications

1. Système pour commander la réception, au niveau d'un côté réseau, d'au moins un paramètre d'information de système par des terminaux (150) d'un réseau cellulaire (100), et/ou sa transmission par ceux-ci, le paramètre d'information de système étant diffusé aux terminaux (150) par les stations de base (410, 510) du réseau cellulaire, le système comprenant :
- des moyens de stockage (810) pour stocker un premier ensemble de valeurs (812) et un second ensemble de valeurs (814) pour le paramètre d'information de système, cas dans lequel il existe une concordance entre les valeurs du premier et du second ensembles qui représente une valeur dans l'un des ensembles associés à une valeur seulement de l'autre ensemble, le premier ensemble de valeurs étant destiné à être utilisé pour les communications via l'interface radio, Uu, Um, et le second ensemble de valeurs étant destiné à être utilisé dans le reste du réseau qui est différent de l'interface radio,
- des moyens de variation (850) pour faire varier périodiquement le premier ensemble de valeurs sans pour autant modifier le second ensemble de valeurs, et
- des moyens de transformation (900, 920, 950) pour transformer des valeurs provenant du premier ensemble de valeurs variables du paramètre en valeurs provenant du second ensemble de valeurs du paramètre pour les messages envoyés dans le sens ascendant et vice-versa pour les messages envoyés dans le sens descendant.

2. Système selon la revendication 1, les moyens de variation étant conçus pour faire varier le premier ensemble de valeurs uniquement pour une zone régionale du réseau cellulaire.

3. Système selon la revendication 2, les moyens de variation étant conçus pour faire varier de façon synchrone le premier ensemble de valeurs des cellules et des cellules avoisinantes d'un noeud de commande (520 ; 420).

4. Système selon la revendication 1, les moyens de variation étant conçus pour faire varier le premier ensemble de valeurs pour le réseau cellulaire tout entier.

5. Système selon l'une quelconque des revendications précédentes, l'intervalle de temps entre deux variations du premier ensemble de valeurs étant programmable.

6. Système selon l'une quelconque des revendications précédentes, les moyens de variation étant conçus pour faire varier à la demande le premier ensemble de valeurs.

7. Système selon l'une quelconque des revendications précédentes, les moyens de stockage étant centralisés ou les moyens de stockage étant répartis parmi les noeuds du sous-système radio du réseau.

8. Système selon l'une quelconque des revendications précédentes, le paramètre d'information de système étant un paramètre permettant de déterminer la localisation d'un terminal, ledit paramètre étant sélectionné parmi un groupe de paramètres représentant une identité de cellule et le groupe comprenant : le paramètre d'identité globale de cellule, le code d'identité de station de base, le numéro du canal radiofréquence absolu, le code de brouillage, les paramètres C1 et les paramètres C2.

9. Système selon l'une quelconque des revendications précédentes, les moyens de transformation étant incorporés, tout au moins partiellement dans le plan de commande (200), à un noeud de commande (520 ; 420), cas dans lequel l'un au moins des messages de signalisation via l'interface Iub et/ou Abis comporte un paramètre provenant du premier ensemble de valeurs et cas dans lequel l'un au moins des messages de signalisation via l'interface lu et/ou A/Gb comporte un paramètre provenant du second ensemble de valeurs.

10. Système selon l'une quelconque des revendications précédentes, les moyens de transformation étant incorporés, tout au moins partiellement dans le plan Utilisateur (300), soit à un serveur soit à une passerelle laquelle effectue la transformation pour une pluralité de serveurs.

11. Système selon l'une quelconque des revendications précédentes, comprenant des moyens pour envoyer une version cryptée du premier ensemble de valeurs et facultativement du second ensemble de valeurs (812, 814) aux terminaux (150) ou à une carte SIM de ceux-ci.

12. Procédé pour commander la réception, au niveau d'un côté réseau, d'au moins un paramètre d'information de système par des terminaux (150) d'un réseau cellulaire (100), et/ou sa transmission par ceux-ci, le paramètre d'information de système étant diffusé aux terminaux (150) par les stations de base (410, 510) du réseau cellulaire, le procédé comprenant les étapes consistant à :
- stocker un premier ensemble (812) et un second ensemble (814) de valeurs pour le paramètre d'information de système, cas dans lequel il existe une concordance entre les valeurs du premier et du second ensembles qui représente une valeur dans l'un des ensembles associés à une valeur seulement de l'autre ensemble, le premier ensemble de valeurs étant destiné à être utilisé pour les communications via l'interface radio, et le second ensemble de valeurs étant destiné à être utilisé dans le reste du réseau qui est différent de l'interface radio,
- faire varier périodiquement le premier ensemble de valeurs sans pour autant modifier le second ensemble de valeurs, et
- transformer des valeurs provenant d'un premier ensemble de valeurs variables du paramètre en valeurs provenant d'un second ensemble de valeurs du paramètre pour les messages envoyés dans le sens ascendant et vice-versa pour les messages envoyés dans le sens descendant.

13. Programme informatique comprenant des moyens de code-programme informatique conçus pour réaliser les étapes de la revendication 12, lorsque ledit programme est exécuté sur un ordinateur.

14. Programme informatique selon la revendication 13 concrétisé sur un support lisible par ordinateur.

15. Support porteur contenant le programme informatique de la revendication 13.
